(19) **Europäisches Patentamt European Patent Office Office européen des brevets**

(11) **EP 2 745 169 B1**

(12) **FASCICULE DE BREVET EUROPEEN**

(45) Date de publication et mention
de la délivrance du brevet:
**09.11.2016 Bulletin 2016/45**

(51) Int Cl.:
***G02F 1/139*** *(2006.01)*    ***G02B 3/14*** *(2006.01)*
***G02F 1/1337*** *(2006.01)*

(21) Numéro de dépôt: **12737287.8**

(22) Date de dépôt: **19.07.2012**

(86) Numéro de dépôt international:
**PCT/EP2012/064184**

(87) Numéro de publication internationale:
**WO 2013/023869 (21.02.2013 Gazette 2013/08)**

(54) **PROCÉDÉ DE RÉALISATION D'UN DISPOSITIF DE PHASE À BASE DE CRISTAL LIQUIDE TWISTÉ À STRUCTURE OPTIMISÉE FONCTIONNANT EN LUMIÈRE NON POLARISÉE**

PROZESS ZUR REALISIERUNG EINES PHASENGERÄTS BASIEREND AUF EINEM VERDREHTEN FLÜSSIGKRISTALL MIT EINER OPTIMIERTEN STRUKTUR ZUR FUNKTION MIT UNPOLARISIERTEM LICHT

PROCESS FOR REALISING A PHASE DEVICE BASED ON A TWISTED LIQUID CRYSTAL WITH AN OPTIMISED STRUCTURE FUNCTIONING WITH UNPOLARISED LIGHT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **18.08.2011 FR 1157408**

(43) Date de publication de la demande:
**25.06.2014 Bulletin 2014/26**

(73) Titulaire: **Commissariat à l'Énergie Atomique et aux Énergies Alternatives 75015 Paris (FR)**

(72) Inventeurs:
• **ROSSINI, Umberto**
  **38500 Coublevie (FR)**
• **CLERC, Laurence**
  **38320 Brie et Angonnes (FR)**

(74) Mandataire: **Esselin, Sophie et al**
**Marks & Clerk France**
**Conseils en Propriété Industrielle**
**Immeuble Visium**
**22 avenue Aristide Briand**
**94117 Arcueil Cedex (FR)**

(56) Documents cités:
**WO-A2-2008/091896**

## Description

Le domaine de l'invention est celui des dispositifs électrooptiques de phase à base de cristal liquide de type nématique twisté ou cholestérique et trouvant des applications dans des domaines tels que celui des correcteurs de front d'onde ou des lentilles et notamment des lentilles de profil kinoforme.

Il a déjà été décrit dans la littérature de tels dispositifs destinés à pouvoir fonctionner en lumière non polarisée. On peut notamment citer la demande de brevet WO 2008/091896 décrivant une lentille constituée d'une électrode au profil kinoforme pour former une cellule qui est remplie d'un cristal liquide cholestérique, ou bien encore la demande de brevet FR 10 01114, décrivant un modulateur de phase à base de cristal liquide a structure hélicoïdale.

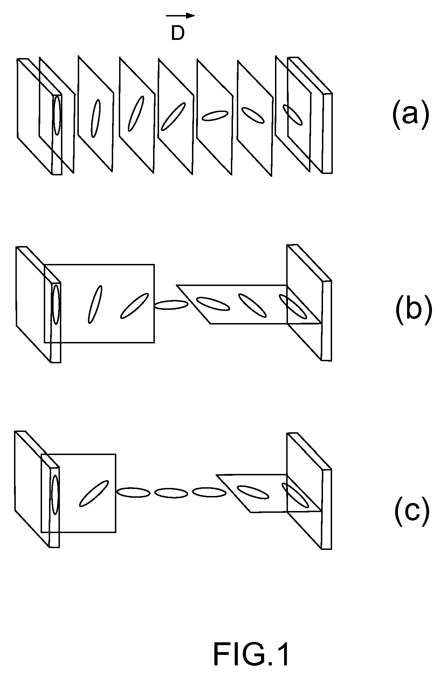

De manière générale, une des caractéristiques principales des cellules à cristal liquide réside dans le fait qu'il est possible de faire changer l'indice optique du milieu par l'application d'un champ électrique. En effet, les molécules cristal liquide, notamment des molécules nématiques présentent un axe optique ordinaire et un axe optique extraordinaire. Ces molécules peuvent être orientées sous l'action d'un champ électrique appliqué, les trois positions (a), (b) et (c) représentées en figure 1 sont respectivement relatives à un champ faible (en deçà du champ nécessaire pour pouvoir commencer à orienter les molécules), un champ moyen et un champ fort.

En changeant l'orientation desdites molécules, on est ainsi en mesure de faire varier l'indice optique moyen vu par un faisceau lumineux traversant le milieu. On peut utiliser un nématique non twisté d'anisotropie diélectrique positive ou négative intégré dans une cellule comportant plus précisément un polariseur en entrée, deux substrats dont un, grâce à un état de surface préalable, permet de contraindre les molécules dans un état initial.

Un tel dispositif fonctionne avec une lumière polarisée et au fur et à mesure que le champ augmente, les molécules de cristal liquide se redressant, la lumière voit un indice intermédiaire entre l'indice ordinaire et extraordinaire.

Pour modifier la phase d'une lumière non polarisée, il faut effectuer cette opération de déphasage sur les deux composantes du champ électrique, on peut pour cela soit superposer deux dispositifs comme décrit dans l'article : Polarization-independent liquid crystal phase modulator using a thin polymer-separated double-layered structure Yi-Hsin Lin, Hongwen Ren, Yung Hsun Wu, Zhibing Ge and Shin-Tson Wu : College of Optics and Photonics, University of Central Florida, Orlando, Florida 32816 et Yue Zhao and Jiyu Fang : Advanced Materials Processing and Analysis Center and Department of Mechanical, Materials, soit utiliser une lame quart d'onde et un miroir et ainsi faire passer la lumière deux fois dans le même dispositif agissant ainsi sur les deux composantes du champ électrique comme décrit dans l'article : Liquid-crystal phase modulator for unpolarized light de Gordon D. Love APPLIED OPTICS I Vol. 32, No. 13 / 1 May 1993.

Dans le premier cas, la superposition pose de gros problèmes de parallaxe et n'autorise donc pas la superposition de matrices à petits pixels. Dans le deuxième cas, l'utilisation d'un réflecteur dans le chemin optique en fait un dispositif à réflexion qui ne peut donc être intégré dans une optique classique (zoom optique pour imageur par exemple).

Il est par ailleurs connu des cellules cristal liquide de type nématique twistée ou cholestérique dans laquelle les molécules ne se disposent pas exactement parallèles les unes aux autres mais adoptent une configuration hélicoïdale. Si on effectue une coupe de la structure suivant un plan perpendiculaire à l'axe z de la spirale, la distorsion des molécules dans le plan est analogue à celle d'un nématique mais la direction privilégiée d'orientation des molécules tourne lentement quand on se déplace suivant l'axe z. On obtient ainsi une structure périodique hélicoïdale le long de la direction z perpendiculaire au plan des couches. Selon la longueur d'onde d'illumination et le pas de l'hélice, de telles structures peuvent se comporter partiellement en miroir si la condition suivante est vérifiée : $p = \lambda/n$ avec $\lambda$ la longueur d'onde de l'onde et $n$ l'indice moyen du milieu cristal liquide.

De manière générale, pour obtenir une cellule à cristaux liquides de type nématique twisté TN ou cholestérique, on utilise habituellement deux substrats transparents assemblés pour former entre eux une cavité dans laquelle les molécules de cristal liquide sont incorporées.

Les opérations de frottement connues de l'homme de l'art réalisées sur les deux substrats et leur assemblage sont telles qu'il existe un angle de torsion dit angle de twist entre les axes de frottement des deux couches d'alignement. Par exemple, cet angle de torsion ou twist peut être de 90°. Il peut également être inférieur, par exemple de 80° ou supérieur, par exemple de 280°, typiquement pour les cristaux liquides dits super nématiques en hélice STN.

De manière générale, les cristaux liquides de type cholestérique s'orientent spontanément dans une direction privilégiée n de l'espace qu'on appelle le directeur. Lorsqu'un champ électrique applique les contraintes dans une certaine orientation, les molécules ont tendance à revenir dans cet état en réponse à une déformation.

Dans le cadre d'un dispositif de phase, lorsqu'une lumière traverse ces cristaux liquides cholestériques à l'état OFF, si le pas du cristal liquide est suffisamment rapide, celui-ci n'a qu'un faible pouvoir rotatoire sur la lumière qui « voit » alors un indice moyen connu pour être approximativement $n_0 + 1/2\Delta n$ où $n_0$ est l'indice ordinaire du cristal liquide et $\Delta n$ la différence entre l'indice extraordinaire et ordinaire ($n_e - n_0$).

Or, pour une épaisseur arbitraire de cristal liquide et un pas donné du cholestérique, il existe outre le petit pouvoir rotatoire, un changement de l'ellipticité de la lumière qui traverse le dispositif.

Par exemple, une lumière polarisée rectiligne traversant le dispositif en sort légèrement elliptique, le taux d'ellipticité dépend de l'azimut entre le directeur d'entrée du cristal liquide, de la direction de la polarisation en entrée et aussi de la longueur d'onde.

Cette ellipticité aurait été obtenue de la même façon en traversant une lame biréfringente simple positionnée à 45° de la polarisation étudiée : on dit alors que le cristal liquide cholestérique a une biréfringence résiduelle, cette biréfringence ayant pour valeur celle de la lame équivalente définie ci-dessus.

Dans ce contexte, la présente invention a pour objet un procédé de réalisation d'un dispositif de phase à base de cristal liquide à structure optimisée permettant de compenser cette biréfringence résiduelle.

Plus précisément, la présente invention concerne un procédé de réalisation d'un dispositif de contrôle de phase de lumière non-polarisée selon la revendication 1.

Selon une variante de l'invention, le dispositif est une lentille.

Selon une variante de l'invention, la lentille est une lentille de profil kinoforme.

Selon une variante de l'invention, le procédé fonctionne au moins dans la bande de longueurs d'onde [400nm, 700nm], le calcul de l'angle de compensation ε étant effectué à une longueur d'onde de 475 nm.

L'invention sera mieux comprise et d'autres avantages apparaîtront à la lecture de la description qui va suivre donnée à titre non limitatif et grâce aux figures annexées parmi lesquelles :

- la figure 1 schématise l'orientation de molécules cristal liquide sous l'action d'un champ électrique;
- les figures 2a, 2b et 2c illustrent les phénomènes cumulés et dissociés de l'action d'une lumière polarisée sur un cristal liquide twisté ;
- la figure 3 illustre les molécules cholestériques le long d'une hélice dans un dispositif à cristal liquide et la polarisation de la lumière le long de l'épaisseur de ladite cellule ;
- la figure 4 illustre l'évolution de la coordonnée Z en fonction du nombre de tours pour une cellule à cristal liquide présentant une épaisseur d égale à 5.1$\mu$m, de variation d'indice $\Delta n = 0,2139$ et pour une lumière de longueur d'onde $\Delta = 0,55$ $\mu$m ;
- la figure 5 illustre l'évolution de l'ellipticité en fonction de l'angle d'azimut d'entrée pour des cellules dont l'épaisseur est constante et le pas d'hélice variable ;
- la figure 6 illustre l'évolution de l'ellipticité en fonction de l'angle d'azimut d'entrée pour des cellules dont le pas d'hélice est constant et l'épaisseur variable ;
- la figure 7 illustre ainsi dans le cadre d'une cellule à cristal liquide présentant 7 tours d'hélice, l'ellipticité résiduelle avec un traitement anti-parallèle en fonction de l'angle d'azimut d'entrée et l'ellipticité résiduelle obtenue avec le procédé de l'invention ;
- la figure 8 illustre les ellipticités résiduelles à différentes longueurs d'onde.

Le Demandeur a considéré que l'action d'une molécule oblongue de cristal liquide twisté d'un angle $\theta$, sur une lumière polarisée, peut être représentée sur la sphère de Poincaré comme celle :

- d'un biréfringent elliptique de coordonnées X et Z définies ci-après :

$$X = \frac{\frac{2\pi\Delta n}{\lambda}}{\sqrt{\left(\frac{2\pi\Delta n}{\lambda}\right)^2 + \frac{4\theta^2}{d^2}}}$$

$$Z = \frac{\frac{2\theta}{d}}{\sqrt{\left(\frac{2\pi\Delta n}{\lambda}\right)^2 + \frac{4\theta^2}{d^2}}}$$

L'amplitude de rotation du biréfringent elliptique étant définie comme suit :

$$Amp = d\sqrt{\left(\frac{2\pi\Delta n}{\lambda}\right)^2 + \frac{4\theta^2}{d^2}}$$

avec :

n : l'indice du cristal

$\theta$ : l'angle de twist

d : l'épaisseur de la cellule cristal liquide

$\lambda$ : la longueur d'onde du faisceau lumineux qui traverse la cellule cristal liquide ;

- suivie d'une rotation dépendant du twist total.

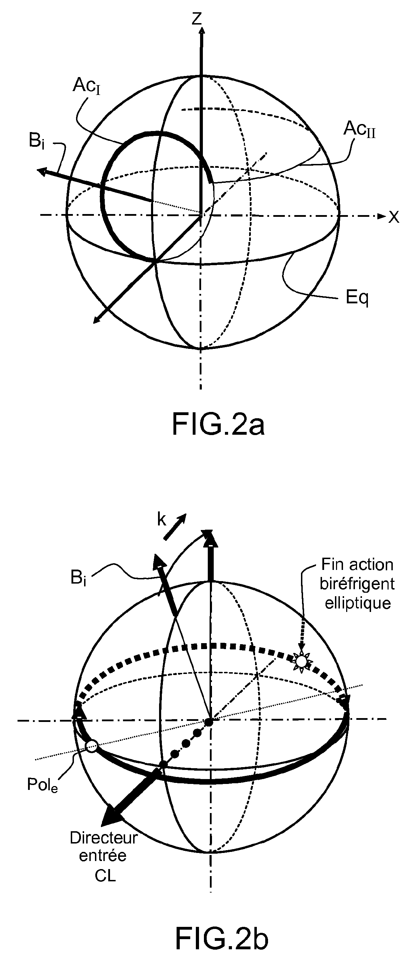

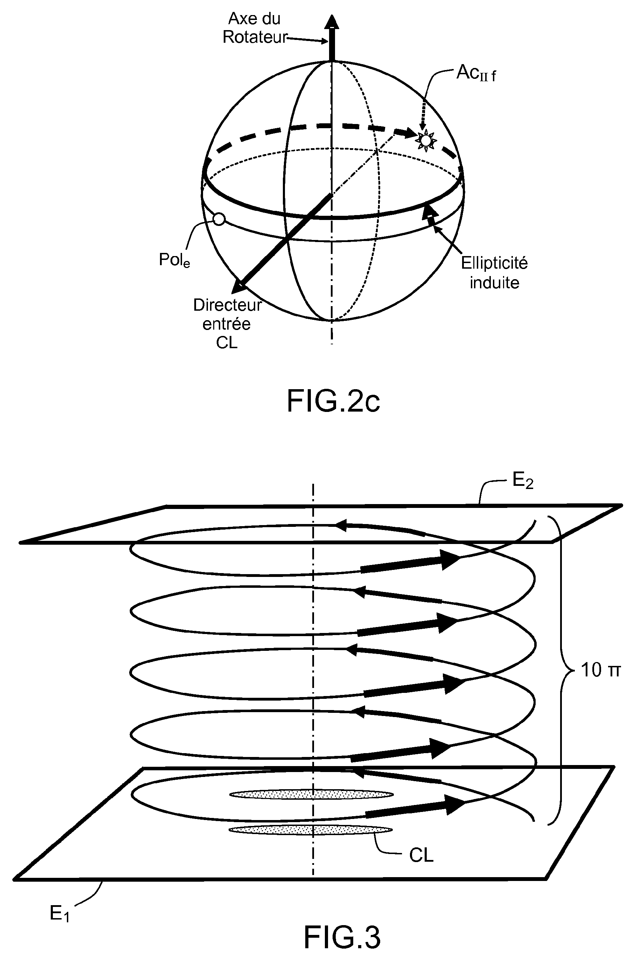

Les figures 2a, 2b et 2c illustrent ainsi de manière cumulée et de manière dissociée les deux phénomènes.

La figure 2b met notamment en évidence, la polarisation d'entrée $Pol_e$ du faisceau à $\lambda$, ainsi que le biréfringent en entrée, montrant le directeur d'entrée CL. On peut ainsi décomposer le phénomène en une première action (celle du biréfringent Bi) qui prend un point de l'équateur Eq et le met n'importe où sur la sphère de Poincaré pour en faire une lumière elliptique, la deuxième action étant la rotation liée au twist total, lesdites actions étant schématisées par les références $Ac_I$, et $AC_{II}$, $ACI_{If}$ indiquant la fin de l'action de rotation.

Il apparaît, ainsi, avec $\theta = 2\pi k$ et k le nombre de tours de cholestérique que plus k est grand, plus l'axe du biréfringent elliptique se positionne verticalement (comme le montre l'évolution sur la figure 2b de l'axe du biréfringent en fonction du nombre k). En parallèle, la figure 3 illustre le nombre de tours d'hélice au sein d'une cellule à cristal liquide inséré entre deux électrodes $E_1$ et $E_2$ dont les faces sont traitées pour imposer un angle de twist dans un exemple où k est égal à 5.

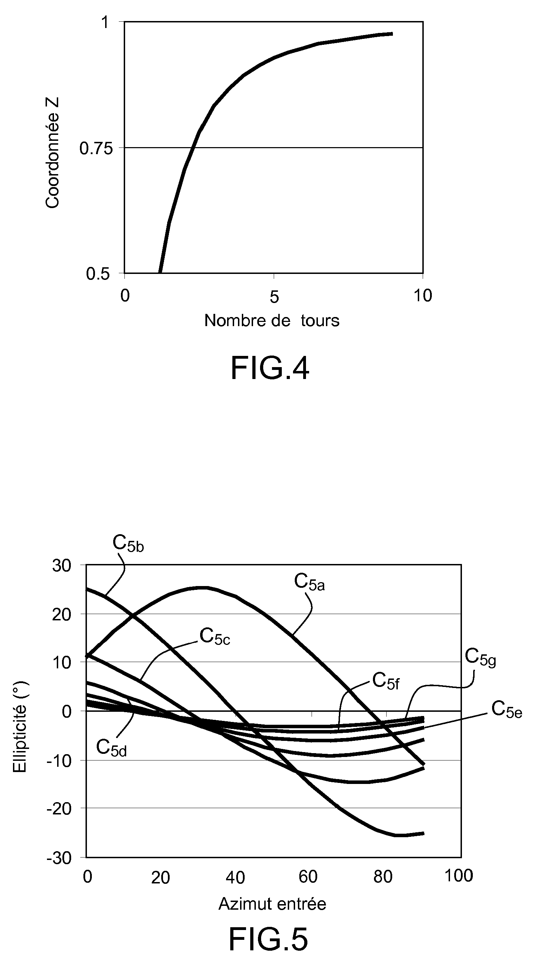

A titre indicatif, la figure 4 montre l'évolution de la coordonnée Z en fonction du nombre de tours pour une cellule à cristal liquide présentant une épaisseur d égale à 5.1 $\mu$m, de variation d'indice $\Delta n = 0,2139$ et pour une lumière de longueur d'onde $\lambda = 0,55$ $\mu$m. Lorsque le nombre de tours est suffisant grand, on tend à atteindre la coordonnée Z = 1, signe d'un axe biréfringent vertical et d'une ellipticité induite nulle.

Il est donc possible en augmentant fortement le nombre de tours du cholestérique de tendre à supprimer l'ellipticité en tendant à obtenir une polarisation rectiligne mais dans ce cas, il devient nécessaire de déployer une tension de commande de plus en plus élevée.

Dans ce contexte, le Demandeur a analysé que lorsque l'on observe la sphère de Poincaré et l'action du biréfringent elliptique sur la lumière, on voit que si l'amplitude de rotation est un multiple de $2\pi$, soit Amp = $2\pi N$, n'importe quelle polarisation rectiligne retombe sur l'équateur après action du biréfringent.

Ceci se traduit mathématiquement par l'équation suivante :

$$\theta = \pi\sqrt{N^2 - \frac{d^2\Delta n^2}{\lambda^2}} = 2k\pi - \varepsilon$$

qui exprime à la fois que l'amplitude du biréfringent vaut $2N\pi$ mais aussi que l'angle $\theta$ doit se rapprocher le plus possible de $2k\pi$ tout en restant inférieur à $2k\pi$.

Soit:

$$\frac{\varepsilon}{\pi} = 2k - \sqrt{N^2 - \frac{d^2\Delta n^2}{\lambda^2}}$$

Avec N entier et $\varepsilon$ l'angle de compensation : une fonction décroissante en fonction du nombre N. $\varepsilon$ est minimum lorsque N entier, est voisin de $2k\sqrt{(1 + \frac{d^2\Delta n^2}{4k^2\lambda^2})}$

Il est ainsi possible de déterminer l'angle $\varepsilon$ tel que :

$$\varepsilon = 2k\pi - N\pi\sqrt{1 - \frac{d^2 \Delta n^2}{N^2 \lambda^2}})$$

Avec N entier le plus proche de $2k\sqrt{(1 + \frac{d^2 \Delta n^2}{4k^2 \lambda^2})}$ $\varepsilon$ correspondant à l'angle de compensation qu'il faut donner pour que le twist soit égal à 2k$\pi$- $\varepsilon$ et donc supprimer l'ellipticité résiduelle.

En effet, la lumière traversant le cholestérique, subit un effet rotatoire résiduel, ainsi si l'on veut partir d'une lumière polarisée en entrée et obtenir une lumière polarisée en sortie, il apparait que la rotation du biréfringent est supérieure à 2$\theta$, il convient donc d'imposer un angle de twist un peu inférieur pour que cette amplitude fasse exactement un nombre entier de fois 2$\pi$.

Cela signifie donc que l'angle $\theta$ doit être égal à 2k$\pi$ - $\varepsilon$, pour obtenir la condition : Amp = 2$\pi$N et que la plus petite valeur de $\varepsilon$ est obtenue pour N=2k.

De manière générale l'ellipticité générée sur un faisceau lumineux dépend de l'épaisseur de la cellule de cristal liquide et du pas d'hélice du cristal liquide en fonction de l'angle de twist.

Par ailleurs, comme énoncé précédemment, selon la longueur d'onde d'illumination et le pas de l'hélice, de telles structures peuvent se comporter partiellement en miroir si la condition suivante est vérifiée : p = $\lambda$/n avec $\lambda$ la longueur d'onde de l'onde et n l'indice du milieu cristal liquide.

Dans le cas de dispositif conçu pour fonctionner en transmission, cela signifie que le pas de l'hélice ne doit pas correspondre à une longueur d'onde telle que l'on forme un miroir de Bragg. On choisit ainsi des conditions d'épaisseur de cellule et un nombre de tours d'hélice k autorisé pour être en deçà de ces conditions. Typiquement, pour un dispositif devant fonctionner dans le visible, on choisit donc de préférence des conditions telles que la réflexion ait lieu dans l'infra rouge plutôt que dans l'ultra violet.

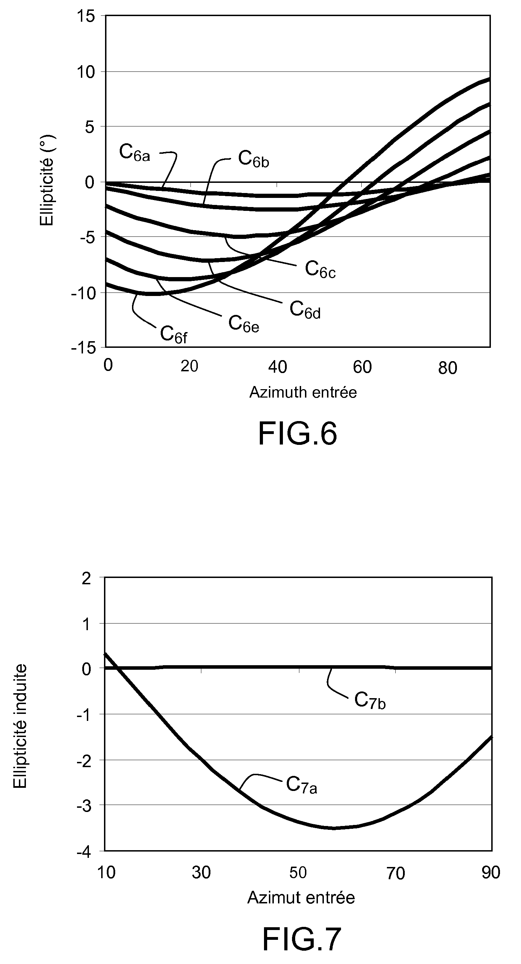

A titre d'exemple, les figures 5 et 6 illustrent l'évolution de l'ellipticité en fonction de l'angle d'azimut d'entrée pour des cellules respectivement dont :

- l'épaisseur est constante et le nombre de tours d'hélice variable (courbe $C_{5a}$ pour 2$\pi$, courbe $C_{5b}$ pour 4$\pi$, courbe $C_{5c}$ pour 6$\pi$, courbe $C_{5d}$ pour 8$\pi$, courbe $C_{5e}$ pour 10$\pi$, courbe $C_{5f}$ pour 12$\pi$ et courbe $C_{5g}$ pour 14$\pi$) ;
- le pas d'hélice est constant et l'épaisseur variable (courbe $C_{6a}$ pour 1 $\mu$m, courbe $C_{6b}$ pour 2 $\mu$m, courbe $C_{6c}$ pour 4 $\mu$m, courbe $C_{6d}$ pour 6 $\mu$m, courbe $C_{6e}$ pour 8 $\mu$m, courbe $C_{6f}$ pour 10 $\mu$m).

Le temps de réponse croît également en fonction du carré de l'épaisseur de la cellule. Un exemple de compromis satisfaisant peut être réalisé avec un cristal liquide présentant une variation d'indice $\Delta$n de l'ordre de 0,2 et une épaisseur de cellule de l'ordre de 5 $\mu$m et un pas de 0,71 $\mu$m. On peut choisir également un pas de 0,83 $\mu$m qui contribue à abaisser la tension de commande en augmentant l'ellipticité induite.

Exemple de lentille de profile kinoforme selon l'invention :

Selon cet exemple, la lentille fonctionnant dans le visible comprend une couche de cristal liquide référencé MCL2062 de la société Merck inséré entre deux électrodes de commande sur lesquelles on été réalisées des traitements de surface d'alignement. L'épaisseur de la couche de cristal liquide est choisie de façon à ce que la variation de chemin optique vue par la lumière, dans la lentille kinoforme soit de 2$\pi$, à la longueur d'onde considérée. Typiquement, cette épaisseur est donc égale à 0,55 / (0,5 $\Delta$n) pour une longueur d'onde de 0,55 $\mu$m.

Il ressort des équations précédentes correspondant à une cellule à cristal liquide présentant 3 tours d'hélice, que l'on peut trouver un angle de compensation $\varepsilon$= 61° permettant d'annuler l'ellipticité résiduelle, cet angle de compensation étant appliqué lors du traitement de frottement anti-parallèle.

De même, pour une cellule à cristal liquide présentant un nombre de tours d'hélice égal à 5, on peut déterminer un angle de compensation $\varepsilon$= 36°.

Selon le procédé de la présente invention, les traitements de surface, classiquement réalisés par frottement en anti-parallèle entre les deux surfaces, sont corrigés de l'angle $\varepsilon$ ainsi préalablement déterminé.

La figure 7 illustre ainsi dans le cadre d'une cellule à cristal liquide présentant 7 tours, l'ellipticité résiduelle avec un traitement anti-parallèle en fonction de l'angle d'azimut d'entrée (courbe 7a) et l'ellipticité résiduelle obtenue avec le procédé de l'invention (courbe 7b) ainsi réduite à zéro.

Le dispositif de la présente invention peut être également opérationnel dans une gamme de longueurs d'onde et non uniquement à une seule longueur d'onde.

Pour cela, le Demandeur a étudié comment varie la biréfringence résiduelle à d'autres longueurs d'onde que celle à laquelle l'optimisation pour annuler l'ellipticité résiduelle, est réalisée.

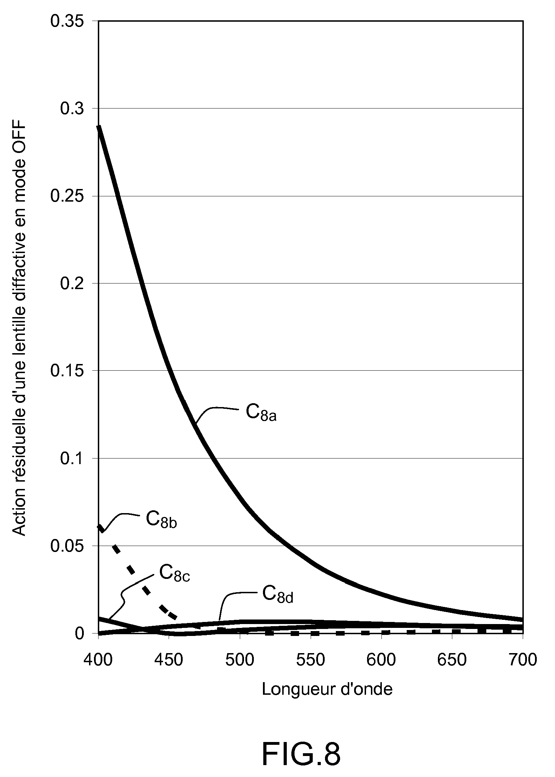

Dans le cas d'une lentille diffractive au profil kinoforme pour laquelle on souhaite une action nulle en mode OFF et une biréfringence nulle en mode OFF(avec les même paramètres de cristal liquide cités précédemment) et 7 tours complets pour le cholestérique, on obtient une action résiduelle représentée dans le graphique illustré en figure 8. La courbe $C_{8a}$ est relative à un traitement de surface classique, la courbe $C_{8b}$ est relative à une optimisation réalisée à une longueur d'onde de 550nm, la courbe $C_{8c}$ est relative à une optimisation réalisée à une longueur d'onde de 450 nm et la courbe $C_{6d}$ est relative à une optimisation réalisée à une longueur d'onde de 400nm.

On peut constater que pour une optimisation calculée pour 450nm, on obtient sur tout le spectre une amélioration considérable par rapport à un dispositif non optimisé. Typiquement, cela représente une correction de 38° sur la direction de frottement de la couche d'alignement (toujours avec les paramètres de cristaux liquides précités).

## Revendications

1.   Procédé de réalisation d'un dispositif de contrôle de phase de lumière non-polarisée comprenant une cellule :

- destinée à être traversée par un faisceau de lumière non-polarisée ayant une longueur d'onde $\lambda$ ;
- ladite cellule contenant un cristal liquide biréfringent ;
- ledit cristal liquide possédant une structure hélicoïdale, inséré entre deux couches d'alignement possédant des axes de frottement et des moyens pour appliquer une tension électrique à ladite cellule, ladite structure hélicoïdale **caractérisée par** un nombre entiers de tours d'hélice k et présentant un angle de twist $\theta$ défini,

**caractérisé en ce que** ledit procédé comprend les étapes suivantes :

- la détermination d'un angle $\varepsilon$ de compensation de biréfringence résiduelle liée à ladite structure hélicoïdale, ledit angle répondant à l'équation suivante :

$$\varepsilon = 2k\pi - N\pi\sqrt{1 - \frac{d^2 \Delta n^2}{N^2 \lambda^2})}$$

avec :

N entier le plus proche de $2k\sqrt{(1 + \frac{d^2 \Delta n^2}{4k^2 \lambda^2})}$

$\Delta$n : la biréfringence du cristal liquide ;
d : l'épaisseur de la cellule cristal liquide ;
k>1;
$\lambda$ : la longueur d'onde du faisceau lumineux qui traverse la cellule cristal liquide ;

- le frottement anti-parallèle des deux couches d'alignement corrigé de l'angle $\varepsilon$ de compensation tel que l'angle de twist est égal à : $\theta = 2k\pi - \varepsilon$.

2.   Procédé de réalisation d'un dispositif selon la revendication 1, **caractérisé en ce que** le dispositif est une lentille.

3.   Procédé de réalisation d'un dispositif selon la revendication 2, **caractérisé en ce que** la lentille est une lentille de profil kinoforme.

4.   Procédé de réalisation d'un dispositif selon l'une des revendications 1 à 3, fonctionnant au moins dans la bande de longueurs d'onde de 400nm à 700nm, le calcul de l'angle de compensation $\varepsilon$ étant effectué à une longueur d'onde $\lambda$ de 475 nm.

**Patentansprüche**

1. Verfahren zur Herstellung einer Vorrichtung zur Steuerung der Phase von unpolarisiertem Licht, eine Zelle umfassend:

   - die dazu dient, von einem Strahl an unpolarisiertem Licht mit einer Wellenlänge $\lambda$ durchlaufen zu werden;
   - wobei die Zelle einen doppelbrechenden Flüssigkristall enthält;
   - wobei der Flüssigkristall eine spiralförmige Struktur aufweist, eingefügt zwischen zwei Ausrichtungsschichten mit Reibungsachsen und Mitteln, um der Zelle eine elektrische Spannung zu verleihen, wobei die spiralförmige Struktur durch eine Anzahl von ganzen Schraubendrehungen k gekennzeichnet ist und einen definierten Verdrehungswinkel $\theta$ aufweist,

   **dadurch gekennzeichnet, dass** das Verfahren die folgenden Schritte aufweist:

   - die Bestimmung eines Winkels $\varepsilon$ zur Kompensation der residualen Doppelbrechung verbunden mit der spiralförmigen Struktur, wobei der Winkel die folgende Gleichung erfüllt:

$$\varepsilon = 2k\pi - N\pi \sqrt{1 - \frac{d^2 \Delta n^2}{N^2 \lambda^2})}$$

   wobei:

   N: die nächstgelegene ganze Zahl zu

$$2k\sqrt{(1 + \frac{d^2 \Delta n^2}{4k^2 \lambda^2})} \quad 2k\sqrt{(1 - \frac{d^2 \Delta n^2}{N^2 \lambda^2})};$$

   $\Delta$n: die Doppelbrechung des Flüssigkristalls;
   d: die Dicke der Flüssigkristallzelle;
   k>1;
   $\lambda$: die Wellenlänge des Lichtstrahls, das die Flüssigkristallzelle durchläuft;
   - die antiparallele Reibung der zwei Ausrichtungsschichten korrigiert durch den Winkel $\varepsilon$ zur Kompensation, sodass der Verdrehungswinkel gleich Folgendem ist:

$$\theta = 2K\pi - \varepsilon.$$

2. Verfahren zur Herstellung einer Vorrichtung nach Anspruch 1, **dadurch gekennzeichnet, dass** die Vorrichtung eine Linse ist.

3. Verfahren zur Herstellung einer Vorrichtung nach Anspruch 2, **dadurch gekennzeichnet, dass** die Linse eine Linse mit kinoformem Profil ist.

4. Verfahren zur Herstellung einer Vorrichtung nach einem der Ansprüche 1 bis 3, funktionierend mindestens im Wellenlängenbereich von 400 nm bis 700 nm, wobei die Berechnung des Kompensationswinkels $\varepsilon$ bei einer Wellenlänge $\lambda$ von 475 nm erfolgt.

**Claims**

1. A method for producing a device for controlling the phase of unpolarised light, comprising a cell:

- intended to be passed through by an unpolarised light beam having a wavelength $\lambda$;
- said cell containing a birefringent liquid crystal;
- said liquid crystal having a helical structure inserted between two alignment layers having friction axes and means for applying an electric voltage to said cell, said helical structure being **characterised by** a number of complete helix turns k and having a defined twist angle $\theta$,

**characterised in that** said method comprises the following steps:

- determining an angle for compensating residual birefringence associated with said helical structure, said angle satisfying the following equation:

$$\varepsilon = 2k\pi - N\pi\sqrt{1 - \frac{d^2\Delta n^2}{N^2\lambda^2})}$$

with:

N being the integer closest to $2k\sqrt{(1 + \frac{d^2\Delta n^2}{4k^2\lambda^2})}$ ;

$\Delta n$ being the birefringence of said liquid crystal;
d being the thickness of said liquid crystal cell;
k >1;
$\lambda$ being the wavelength of the light beam that passes through said liquid crystal cell;

- the anti-parallel friction of said two alignment layers being corrected by said compensation angle $\varepsilon$ such that said twist angle is equal to:

$$\theta = 2k\pi - \varepsilon .$$

2. The method for producing a device according to claim 1, **characterised in that** said device is a lens.

3. The method for producing a device according to claim 2, **characterised in that** said lens is a lens with a kinoform profile.

4. The method for producing a device according to any one of claims 1 to 3, operating at least in the 400 nm to 700 nm wavelength band, the computation of said compensation angle $\varepsilon$ being carried out at a wavelength $\lambda$ of 475 nm.

FIG.1

FIG.2a

FIG.2b

FIG.2c

FIG.3

FIG.4

FIG.5

FIG.6

FIG.7

FIG.8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2008091896 A

- FR 1001114

**Littérature non-brevet citée dans la description**

- **YI-HSIN LIN ; HONGWEN REN ; YUNG HSUN WU ; ZHIBING GE ; SHIN-TSON WU.** College of Optics and Photonics. University of Central Florida
- **YUE ZHAO ; JIYU FANG.** *Advanced Materials Processing and Analysis Center and Department of Mechanical, Materials*

- **GORDON D. LOVE.** Liquid-crystal phase modulator for unpolarized light. *APPLIED OPTICS,* 01 Mai 1993, vol. 32 (13